# EUROPEAN PATENT APPLICATION

(11) **EP 2 485 470 A1**
(43) Date of publication of application: **08.08.2012**
(21) Application number: 10820194.8
(22) Date of filing: 09.04.2010
(51) Int. Cl.: H04N 1/393, G06T 3/40, G06T 5/20, H04N 7/01

(54) **IMAGE ENLARGEMENT DEVICE, IMAGE ENLARGEMENT PROGRAM, AND DISPLAY APPARATUS**

(30) Priority: 30.09.2009 JP 2009225995
(71) Applicant: Sharp Kabushiki Kaisha, Osaka-shi, Osaka 545-8522 (JP)
(72) Inventor: ZHANG Xiaomang, Osaka-shi Osaka 545-8522 (JP)
(74) Representative: Goddar, Heinz J.
(86) International application number: PCT/JP2010/056426
(87) International publication number: WO 2011/040074

(57) **Abstract**

There is provided an image enlargement device including: an image enlargement filter (1) that generates a first enlarged image by enlarging an input image; a wavelet transform portion (2) that performs a wavelet transform on the first enlarged image; gain processing portions (3, 4 and 5) that perform gain processing on sub-band components including high-frequency components output from the wavelet transform portion (2); and an inverse wavelet transform portion (6) that regards, as a wavelet transformed image, the input image and the sub-band components including high-frequency components which are output from the gain processing portion and on which the gain processing has been performed, and that generates a second enlarged image by performing an inverse wavelet transform.

## Description

### Technical Field

The present invention relates to a technology for enlarging an image.

### Background Art

In recent years, full HD (1920 pixels × 1080 pixels) television sets have been commonly used, and display panels having a higher resolution of 4k × 2k (about 4096 pixels × 2048 pixels), a higher resolution of 8k × 4k (about 8192 pixels × 4096 pixels) and the like have also been developed. On the other hand, a large amount of content for SD (720 pixels × 480 pixels in NTSC, 720 pixels × 576 pixels in PAL) are present. Hence, an image enlargement technology for displaying the content of low resolution on the display apparatus of high resolution is required.

Although various types of image enlargement methods have been conventionally proposed, there are some methods, among them, that use a wavelet transform.

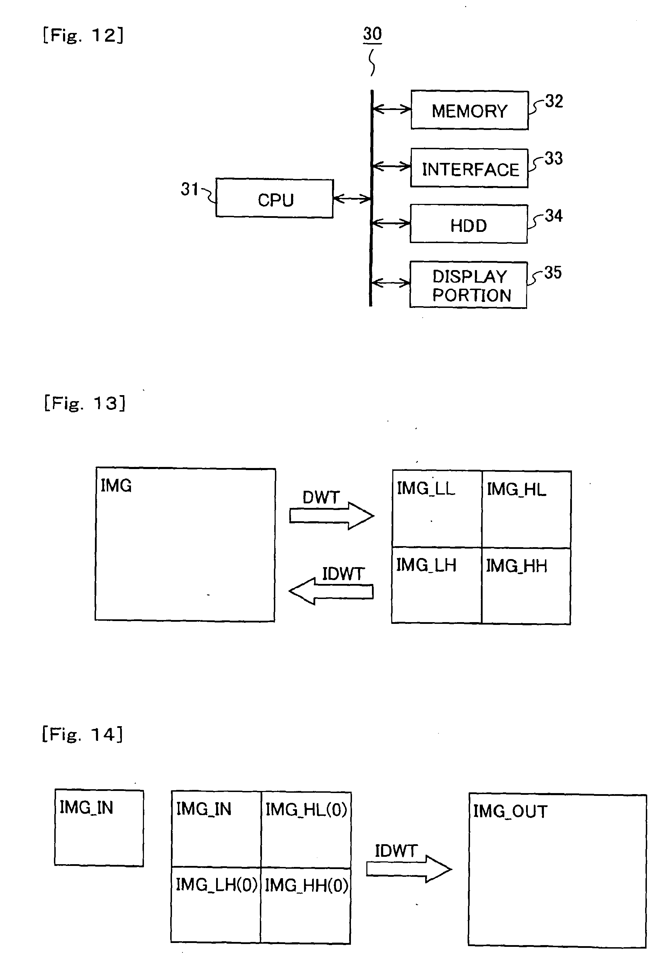

An outline of the wavelet transform will now be described. Fig. 13 is a diagram schematically showing an original image and a wavelet transformed image. A discrete wavelet transform (DWT) is performed on the original image IMG, and thus the wavelet transformed image composed of sub-band components IMG_LL, IMG_HL, IMG_LH and IMG_HH is obtained. The image size of each of the sub-band components is one-fourth of the original image IMG.

Low-pass filter processing and sampling processing for reduction to a half size are performed in a horizontal direction on the original image IMG, and, on the results of these types of processing, low-pass filter processing and sampling processing for reduction to a half size are performed in a vertical direction, with the result that the sub-band component IMG_LL is obtained. The sub-band component IMG_LL may be obtained by performing the following procedure: the low-pass filter processing and the sampling processing for reduction to a half size are performed in the vertical direction on the original image IMG, and, on the results of these types of processing, the low-pass filter processing and the sampling processing for reduction to a half size are performed in the horizontal direction.

High-pass filter processing and the sampling processing for reduction to a half size are performed in the horizontal direction on the original image IMG, and, on the results of these types of processing, the low-pass filter processing and the sampling processing for reduction to a half size are performed in the vertical direction, with the result that the sub-band component IMG_HL is obtained. Hence, the sub-band component IMG_HL indicates an image obtained by extracting high-frequency components in the horizontal direction of the original image IMG, that is, an image that reflects edge information facing in the vertical direction. The sub-band component IMG_HL may be obtained by performing the following procedure: the low-pass filter processing and the sampling processing for reduction to a half size are performed in the vertical direction on the original image IMG, and, on the results of these types of processing, the high-pass filter processing and the sampling processing for reduction to a half size are performed in the horizontal direction.

The low-pass filter processing and the sampling processing for reduction to a half size are performed in the horizontal direction on the original image IMG, and, on the results of these types of processing, the high-pass filter processing and the sampling processing for reduction to a half size are performed in the vertical direction, with the result that the sub-band component IMG_LH is obtained. Hence, the sub-band component IMG_LH indicates an image obtained by extracting high-frequency components in the vertical direction of the original image IMG, that is, an image that reflects edge information facing in the horizontal direction. The sub-band component IMG_LH may be obtained by performing the following procedure: the high-pass filter processing and the sampling processing for reduction to a half size are performed in the vertical direction on the original image IMG, and, on the results of these types of processing, the low-pass filter processing and the sampling processing for reduction to a half size are performed in the horizontal direction.

The high-pass filter processing and the sampling processing for reduction to a half size are performed in the horizontal direction on the original image IMG, and, on the results of these types of processing, the high-pass filter processing and the sampling processing for reduction to a half size are performed in the vertical direction, with the result that the sub-band component IMG_HH is obtained. Hence, the sub-band component IMG_HH indicates an image (an image obtained by extracting high-frequency components in an oblique direction of the original image IMG) obtained by extracting high-frequency components in the horizontal direction of and high-frequency components in the vertical direction of the original image IMG, that is, an image that reflects edge information facing in the oblique direction. The sub-band component IMG_HH may be obtained by performing the following procedure: the high-pass filter processing and the sampling processing for reduction to a half size are performed in the vertical direction on the original image IMG, and, on the results of these types of processing, the high-pass filter processing and the sampling processing for reduction to a half size are performed in the horizontal direction.

The original image IMG can be obtained by performing an inverse discrete wavelet transform (IDWT) on the wavelet transformed image composed of the sub-band components IMG_LL, IMG_HL, IMG_LH and IMG_HH.

An outline of the image enlargement method using the wavelet transform will then be described. Fig. 14 is a diagram schematically showing the outline of the image enlargement method using the wavelet transform.

An input image IMG_IN to be enlarged is assumed to be the sub-band component IMG_LL of the wavelet transformed image. Since there is no information on the remaining three sub-band components (the sub-band components including high-frequency components) IMG_HL, IMG_LH and IMG_HH, they are assumed to be sub-band components IMG_HL (0), IMG_LH (0) and IMG_HH (0) in which all pixel values are zero. Then, the input image IMG_IN can be regarded as a wavelet transformed image composed of the sub-band components IMG_IN, IMG_HL (0), IMG_LH (0) and IMG_HH (0).

On the wavelet transformed image composed of these sub-band components IMG_IN, IMG_HL (0), IMG_LH (0) and IMG_HH (0), the inverse discrete wavelet transform is performed, and thus it is possible to obtain an output image IMG_OUT that is an enlarged image having four times as many pixels as the number of images of the input image IMG_IN. However, since the wavelet transformed image composed of these sub-band components IMG_IN, IMG_HL (0), IMG_LH (0) and IMG_HH (0) lacks information on high-frequency components, the output image IMG_OUT that is the enlarged image tends to be blurred.

In other words, if appropriate information on the three sub-band components (the sub-band components including the high-frequency components) IMG_HL, IMG_LH and IMG_HH can be obtained, it is possible to solve the problem that the enlarged image tends to be blurred. Gain adjustment is performed on the sub-band component IMG_HL, and then the inverse discrete wavelet transform is performed, and thus it is possible to obtain an enlarged image in which an edge facing in the vertical direction is enhanced; gain adjustment is performed on the sub-band component IMG_LH, and then the inverse discrete wavelet transform is performed, and thus it is possible to obtain an enlarged image in which an edge facing in the horizontal direction is enhanced; gain adjustment is performed on the sub-band component IMG_HH, and then the inverse discrete wavelet transform is performed, and thus it is possible to obtain an enlarged image in which an edge facing in the oblique direction is enhanced.

Methods of obtaining information on the three sub-band components (the sub-band components including the high-frequency components) IMG_HL, IMG_LH and IMG_HH are proposed in patent document 1, patent document 2, non-patent document 1 to 3 and the like.

The image enlargement method proposed in patent document I will be described with reference to Fig. 15. The discrete wavelet transform is first performed on an input image IMG_IN to be enlarged, and thus a wavelet transformed image composed of sub-band components LL2, HL2, LH2 and HH2 is obtained. Then, information on sub-band components LL2, HL2, LH2 and HH2 is used, and thus three sub-band components (sub-band components including high-frequency components) IMG_HL, IMG_LH and IMG_HH are predicted. A coefficient used for the prediction is a coefficient that is obtained by learning. Then, the input image IMG_IN to be enlarged is assumed to be a sub-band component IMG_LL of the wavelet transformed image, and an image obtained by combining it with the predicted three sub-band components (the sub-band components including the high-frequency components) IMG_HL, IMG_LH and IMG_HH is regarded as the wavelet transformed image, with the result that an output image IMG_OUT which is an enlarged image is obtained by performing the inverse discrete wavelet transform. In the image enlargement method proposed in patent document 3, as in the image enlargement method proposed in patent document 3, three sub-band components (sub-band components including high-frequency components) IMG_HL, IMG_LH and IMG_HH are predicted.

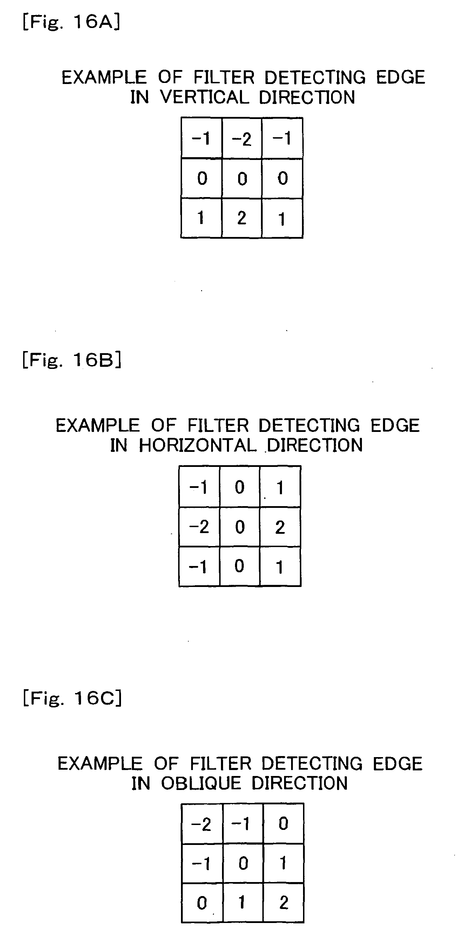

The image enlargement method proposed in patent document 2 will then be described with reference to Figs. 16A to 16C. An image to be enlarged is assumed to be a sub-band component IMG_LL of a wavelet transformed image. Then, a filter shown in Fig. 16A is used to extract an edge component in a vertical direction of the image to be enlarged, it is assumed to be a sub-band component IMG_HL that is lacked, a filter shown in Fig. 16B is used to extract an edge component in a horizontal direction of the image to be enlarged, it is assumed to be a sub-band component IMG_LH that is lacked, a filter shown in Fig. 16C is used to extract an edge component in an oblique direction of the image to be enlarged, it is assumed to be a sub-band component IMG_HH that is lacked and an image obtained by combining the four sub-band components is regarded as the wavelet transformed image, with the result that an enlarged image is obtained by performing the inverse discrete wavelet transform.

The image enlargement method proposed in non-patent document 2 will then be described. Non-patent document 1 discloses a method of assuming a sparsity constraint, repeatedly performing computation until convergence is performed and thereby predicting an edge so as to predict three sub-band components (sub-band components including high-frequency components); in non-patent document 2, such a method is utilized for the enlargement of an image. In non-patent document 3, the method disclosed in non-patent document 1 is improved, and the number of convergence is reduced to two and an image is enlarged.

### Related Art Document

### Patent Document

Patent document 1: JP-A-2000-215305 (paragraph [0035], Fig. 5)
Patent document 2: JP-A-2001-8027 (paragraph [0041], Figs. 1 and 6)
Patent document 3: JP-A-H7-152907 (Abstract)

### Non-Patent Document

Non-patent document 1: G. Guleryuz, "Predicting wavelet coefficients over Edges using estimates based on nonlinear approximants," Proc. data compression conference, IEEE DCC-04, 2004
Non-patent document 2: C. S. Boon, O. G. Guleryuz, T. Kawahara, and Y. Suzuki, "Sparse super-resolution reconstructions of video from mobile devices in digital TV broadcast applications," Proc. SPIE conference on applications on of digital image processing XXIX, San Diego, 2006
Non-patent document 3: S. Kanumuri, O. G. Guleryuz and M. R. Givanlar. "Fast super-resolution reconstructions of mobile video using warped transforms and adaptive thresholding," Proc. SPIE conference on applications of digital image processing XXX, 2007

### Disclosure of the Invention

### Problems to be Solved by the Invention

In the image enlargement method proposed in patent document 1, it is impossible to ensure that, on an image which has not been subjected to learning, sub-band components including high-frequency components can be properly predicted. In the image enlargement method proposed in patent document 1, it is impossible to perform sufficient edge enhancement at the same time when an image is enlarged. Thus, it is likely that an enlarged image tends to be blurred and is unclear. In the image enlargement method proposed in patent document 3, the same problem as in the image enlargement method proposed in patent document 1 is encountered, and furthermore, an enormous amount of computation is disadvantageously required.

In the image enlargement method proposed in patent document 2, judging from the illustrated edge detection filters (see Figs. 16A to 16C), it is impossible to obtain appropriate information on the sub-band components including the high-frequency components. Even when edge enhancement is performed using the edge detection filters without the edge detection filters being processed, overshoot and jaggies are produced, and furthermore when the inverse discrete wavelet transform is performed, the image size is enlarged twice both in a horizontal direction and a vertical direction, and thus the jaggy is extended. Consequently, in the enlarged image obtained by performing the image enlargement method proposed in patent document 2, unnatural jaggies are produced in the enhanced edge.

In the image enlargement methods proposed in non-patent document 2 and non-patent document 3, it is disadvantageously impossible to enhance a weak edge that is equal to or less than a threshold value under the condition of a sparsity constraint. Moreover, in the image enlargement methods proposed in non-patent document 2 and non-patent document 3, since it is necessary to repeatedly perform, when predicting edge information, computation a plurality of times until convergence is performed, a large amount of computation is needed, and this disadvantageously causes delay.

In view of the foregoing conditions, an object of the present invention is to provide an image enlargement device, an image enlargement program and a display apparatus that can produce a high-quality enlarged image.

### Means for Solving the Problem

To achieve the above object, according to the present invention, there is provided an image enlargement device including: an image enlargement filter that generates a first enlarged image by enlarging an input image twice both in a horizontal direction and in a vertical direction; a wavelet transform portion that generates, by performing a wavelet transform on the first enlarged image, a first sub-band component indicating an image obtained by extracting a low-frequency component in the horizontal direction of and a low-frequency component in the vertical direction of the first enlarged image, a second sub-band component indicating an image obtained by extracting a high-frequency component in the horizontal direction of the first enlarged image, a third sub-band component indicating an image obtained by extracting a high-frequency component in the vertical direction of the first enlarged image and a fourth sub-band component indicating an image obtained by extracting the high-frequency component in the horizontal direction of and the high-frequency component in the vertical direction of the first enlarged image; a gain processing portion that performs gain processing on the second sub-band component, the third sub-band component and the fourth sub-band component output from the wavelet transform portion; and an inverse wavelet transform portion that regards, as a wavelet transformed image, the input image and the second sub-band component, the third sub-band component and the fourth sub-band component which are output from the gain processing portion and on which the gain processing has been performed, and that generates a second enlarged image by performing an inverse wavelet transform.

An edge enhancement processing portion that performs, based on a difference between the first enlarged image and the second enlarged image, edge enhancement processing on the second enlarged image may be included. In this case, the edge enhancement processing portion may further include a coring portion that performs coring processing on an image corresponding to the difference between the first enlarged image and the second enlarged image. Alternatively, an edge enhancement processing portion that performs, based on a difference between the input image and the first sub-band component, edge enhancement processing on the second enlarged image may be included. In this case, the edge enhancement processing portion may further include a coring portion that performs coring processing on an image corresponding to the difference between the input image and the first sub-band component.

To achieve the above object, according to the present invention, there is provided an image enlargement device including: an image enlargement filter that generates a first enlarged image by enlarging an input image; a wavelet transform portion that generates, by performing a wavelet transform on the first enlarged image, a first sub-band component indicating an image obtained by extracting a low-frequency component in the horizontal direction of and a low-frequency component in the vertical direction of the first enlarged image, a second sub-band component indicating an image obtained by extracting a high-frequency component in the horizontal direction of the first enlarged image, a third sub-band component indicating an image obtained by extracting a high-frequency component in the vertical direction of the first enlarged image and a fourth sub-band component indicating an image obtained by extracting the high-frequency component in the horizontal direction of and the high-frequency component in the vertical direction of the first enlarged image; a gain processing portion that performs gain processing on the second sub-band component, the third sub-band component and the fourth sub-band component output from the wavelet transform portion; and an inverse wavelet transform portion that regards, as a wavelet transformed image, the first sub-band component and the second sub-band component, the third sub-band component and the fourth sub-band component which are output from the gain processing portion and on which the gain processing has been performed, and that generates a second enlarged image by performing an inverse wavelet transform.

In the image enlargement device of any one of the configurations described above, the image enlargement filter is preferably a filter that can raise the high-frequency component.

To achieve the above object, according to the present invention, there is provided an image enlargement program that instructs a computer to function as an image enlargement device including: an image enlargement filter that generates a first enlarged image by enlarging an input image twice both in a horizontal direction and in a vertical direction; a wavelet transform portion that generates, by performing a wavelet transform on the first enlarged image, a first sub-band component indicating an image obtained by extracting a low-frequency component in the horizontal direction of and a low-frequency component in the vertical direction of the first enlarged image, a second sub-band component indicating an image obtained by extracting a high-frequency component in the horizontal direction of the first enlarged image, a third sub-band component indicating an image obtained by extracting a high-frequency component in the vertical direction of the first enlarged image and a fourth sub-band component indicating an image obtained by extracting the high-frequency component in the horizontal direction of and the high-frequency component in the vertical direction of the first enlarged image; a gain processing portion that performs gain processing on the second sub-band component, the third sub-band component and the fourth sub-band component output from the wavelet transform portion; and an inverse wavelet transform portion that regards, as a wavelet transformed image, the input image and the second sub-band component, the third sub-band component and the fourth sub-band component which are output from the gain processing portion and on which the gain processing has been performed, and that generates a second enlarged image by performing an inverse wavelet transform.

To achieve the above object, according to the present invention, there is provided an image enlargement program that instructs a computer to function as an image enlargement device including: an image enlargement filter that generates a first enlarged image by enlarging an input image; a wavelet transform portion that generates, by performing a wavelet transform on the first enlarged image, a first sub-band component indicating an image obtained by extracting a low-frequency component in the horizontal direction of and a low-frequency component in the vertical direction of the first enlarged image, a second sub-band component indicating an image obtained by extracting a high-frequency component in the horizontal direction of the first enlarged image, a third sub-band component indicating an image obtained by extracting a high-frequency component in the vertical direction of the first enlarged image and a fourth sub-band component indicating an image obtained by extracting the high-frequency component in the horizontal direction of and the high-frequency component in the vertical direction of the first enlarged image; a gain processing portion that performs gain processing on the second sub-band component, the third sub-band component and the fourth sub-band component output from the wavelet transform portion; and an inverse wavelet transform portion that regards, as a wavelet transformed image, the first sub-band component and the second sub-band component, the third sub-band component and the fourth sub-band component which are output from the gain processing portion and on which the gain processing has been performed, and that generates a second enlarged image by performing an inverse wavelet transform.

To achieve the above object, according to the present invention, there is provided a display apparatus including: the image enlargement device of any one of the configurations described above.

In the display apparatus configured as described above, the input image of the image enlargement device may be a brightness image. Alternatively, in the display apparatus configured as described above, three of the image enlargement devices are included, an input image of the first image enlargement device is a red component image, an input image of the second image enlargement device is a green component image and an input image of the third image enlargement device is a blue component image.

### Advantages of the Invention

According to the present invention, since it is possible to adjust edge enhancement strength by performing gain processing on sub-band components including high frequency, it is possible to obtain a high-quality image with a small number of jaggies.

### Brief Description of Drawings

[Fig. 1] A diagram showing the configuration of an image enlargement device according to a first embodiment of the present invention;
[Fig. 2] A flowchart showing the operation of the image enlargement device according to the first embodiment of the present invention;
[Fig. 3] A diagram showing the configuration of an image enlargement device according to a second embodiment of the present invention;
[Fig. 4] A flowchart showing the operation of the image enlargement device according to the second embodiment of the present invention;
[Fig. 5] A diagram showing the input/output characteristic of a coring portion;
[Fig. 6] A diagram schematically showing the image size of each image in the first embodiment and the second embodiment of the present invention;
[Fig. 7] A diagram showing the configuration of an image enlargement device according to a third embodiment of the present invention;
[Fig. 8] A diagram schematically showing the image size of each image in the third embodiment of the present invention;
[Fig. 9] A diagram showing a schematic configuration of a liquid crystal television set that is an example of a display apparatus according to the present invention;
[Fig. 10A] A diagram showing an example of the configuration of a back end portion using the image enlargement device according to the first embodiment of the present invention;
[Fig. 10B] A diagram showing an example of the configuration of a back end portion using the image enlargement device according to the second embodiment of the present invention;
[Fig. 10C] A diagram showing an example of the configuration of a back end portion using the image enlargement device according to the third embodiment of the present invention;
[Fig. 10D] A diagram showing an example of the configuration of a back end portion using an image enlargement device according to a variation of the second embodiment of the present invention;
[Fig. 10E] A diagram showing an example of the configuration of a back end portion which uses an image enlargement device according to the present invention and in which the image enlargement device processes RGB signals;
[Fig. 11] A diagram showing a variation of the image enlargement device according to the second embodiment of the present invention;
[Fig. 12] A diagram showing a schematic configuration of a computer;
[Fig. 13] A diagram schematically showing an original image and a wavelet transformed image;
[Fig. 14] A diagram schematically showing an outline of an image enlargement method using a wavelet transform;

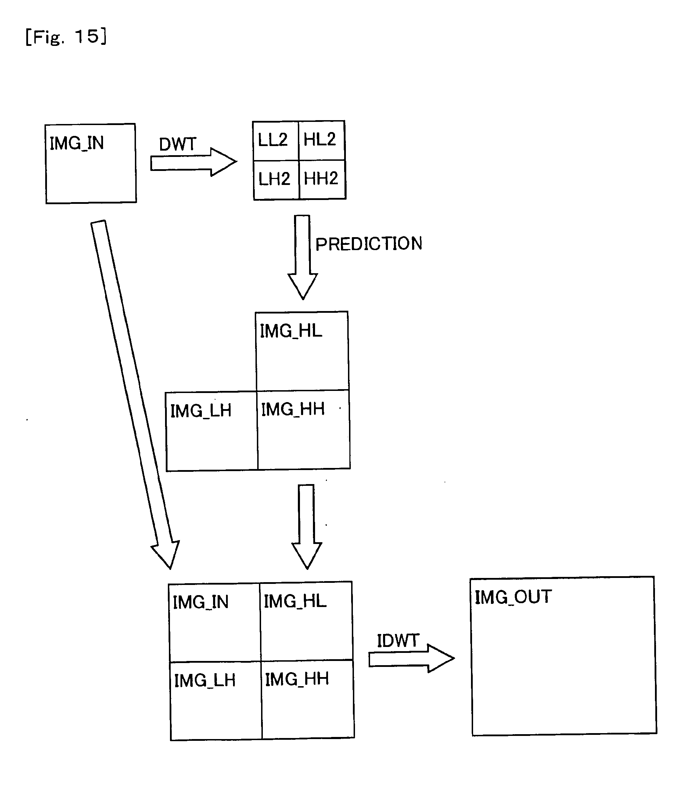

[Fig. 15] A diagram schematically showing an outline of an image enlargement method proposed in patent document 1;
[Fig. 16A] A diagram showing an example of the filter used in an image enlargement method proposed in patent document 2;
[Fig. 16B] A diagram showing an example of the filter used in the image enlargement method proposed in patent document 2; and
[Fig. 16C] A diagram showing an example of the filter used in the image enlargement method proposed in patent document 2.

### Mode for Carrying Out the Invention

Embodiments of the present invention will be described below with reference to drawings.

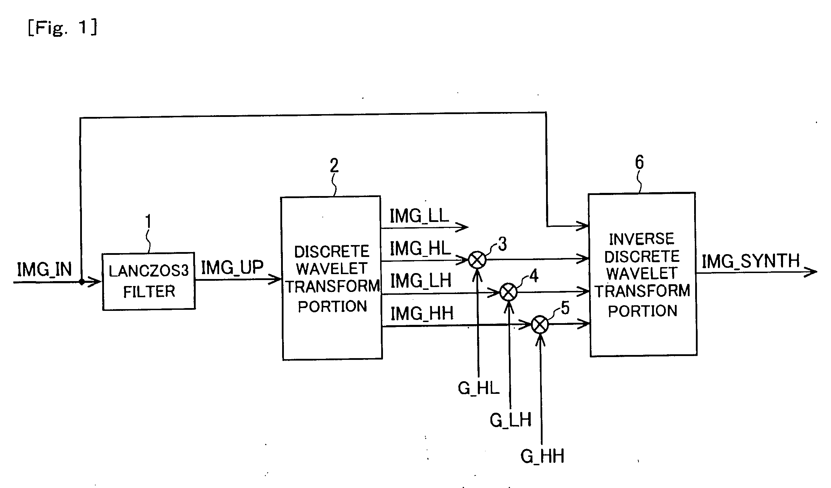

<An image enlargement device according to a first embodiment of the present invention>
The configuration of an image enlargement device according to a first embodiment of the present invention is shown in Fig. 1. The image enlargement device according to the first embodiment of the present invention includes: a Lanczos3 filter 1; a discrete wavelet transform portion 2; multipliers 3 to 5; an inverse discrete wavelet transform portion 6; and a control portion (not shown) that incorporates a rewritable nonvolatile memory. In the present embodiment, CDF97 is used for discrete wavelet transform.

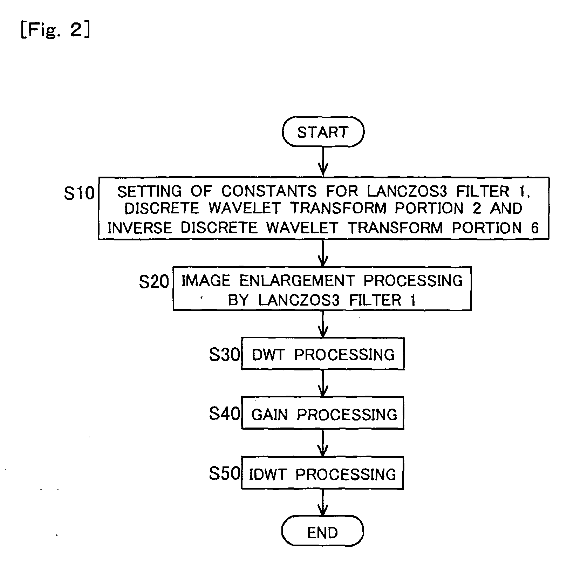

The operation of the image enlargement device according to the first embodiment of the present invention will be described with reference to a flowchart shown in Fig. 2.

The control portion first reads, from the nonvolatile memory, the settings of constants for the Lanczos3 filter 1, the discrete wavelet transform portion 2 and the inverse discrete wavelet transform portion 6, and sets the constants in the Lanczos3 filter 1, the discrete wavelet transform portion 2 and the inverse discrete wavelet transform portion 6 (step S10). In the present embodiment, the constant of the Lanczos3 filter 1 is set such that the Lanczos3 filter 1 functions as an image enlargement filter for enlarging an image twice both in a horizontal direction and in a vertical direction.

Then, the Lanczos3 filter 1 generates an enlarged image IMG_UP that is obtained by enlarging an input image IMG_IN twice both in the horizontal direction and in the vertical direction (step S20).

Then, the discrete wavelet transform portion 2 performs the discrete wavelet transform on the enlarged image IMG_UP, and thereby generates sub-band components IMG_LL, IMG_HL, IMG_LH and IMG_HH (step S30).

Then, in step S40, gain processing is performed. The control portion reads, from the nonvolatile memory, a gain value G_HL corresponding to the strength of enhancement of an edge facing in the vertical direction, a gain value G_LH corresponding to the strength of enhancement of an edge facing in the horizontal direction, a gain value G_HH corresponding to the strength of enhancement of an edge facing in an oblique direction; the control portion then feeds the gain value G_HL to the multiplier 3, the gain value G_LH to the multiplier 4 and the gain value G_HH to the multiplier 5. The multiplier 3 feeds, to the inverse discrete wavelet transform portion 6, the result obtained by multiplying the sub-band component IMG_HL and the gain value G_HL. The multiplier 4 feeds, to the inverse discrete wavelet transform portion 6, the result obtained by multiplying the sub-band component IMG_LH and the gain value G_LH. The multiplier 5 feeds, to the inverse discrete wavelet transform portion 6, the result obtained by multiplying the sub-band component IMG_HH and the gain value G_HH.

Then, in step S50, the inverse discrete wavelet transform portion 6 assumes that the input image IMG_IN is a sub-band component IMG_LL of a wavelet transformed image, and an image obtained by combining it with sub-band components IMG_HL · G_HL, IMG_LH . G_LH and IMG_HH . G_HH on which three types of gain processing have been performed is regarded as the wavelet transformed image and the inverse discrete wavelet transform is performed, with the result that an enlarged image IMG_SYNTH is generated. The enlarged image IMG_SYNTH is an output of the image enlargement device according to the first embodiment of the present invention.

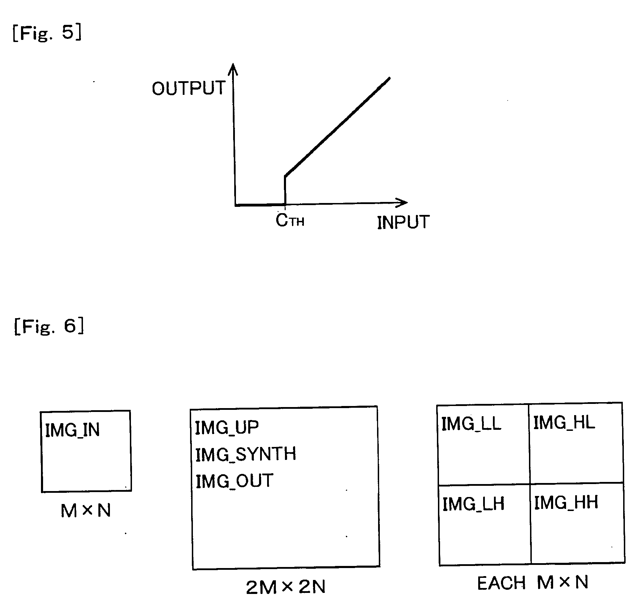

In the present embodiment, when the input image IMG_IN has M pixels × N pixels (M and N each are natural numbers), the enlarged images IMG_UP and IMG_SYNTH each have 2M pixels × 2N pixels, and the sub-band components IMG_LL, IMG_HL, IMG_LH and IMG_HH each have M pixels × N pixels (see Fig. 6). In other words, the image enlargement device according to the first embodiment of the present invention enlarges the image twice both in the horizontal direction and in the vertical direction.

The gain values G_HL, G_LH and G_HH stored in the nonvolatile memory incorporated in the control portion are rewritten, and thus it is possible to freely adjust the edge enhancement strength.

Although, in the image enlargement processing performed by the Lanczos3 filter 1, weak high-frequency components (high-frequency components that are attenuated to some degree) can be raised, if a few weak high-frequency components are raised, this also affects low-frequency signals. However, in the image enlargement processing device according to the first embodiment of the present invention, the inverse discrete wavelet transform portion 6 does not use the sub-band component IMG_LL obtained by performing the discrete wavelet transform on the enlarged image IMG_UP generated in the image enlargement processing by the Lanczos3 filter 1, and assumes that the input image IMG_IN is the sub-band component IMG_LL of the wavelet transformed image, with the result that the effect can be eliminated. In this way, it is possible to obtain an enlarged image that corresponds accurately to the input image IMG_IN which is an original image. It is also possible to extract, from the enlarged image IMG_SYNTH, the input image IMG_IN which is the original image.

Although, in the image enlargement processing performed by the Lanczos3 filter 1, weak high-frequency components (high-frequency components that are attenuated to some degree) can be raised, it is impossible to adjust the strength of the weak high-frequency components. However, in the image enlargement device according to the first embodiment of the present invention, the gain processing is performed on the sub-band components IMG_HL, IMG_LH and IMG_HH, and thus it is possible to adjust the edge enhancement strength, with the result that it is possible to obtain a high-quality image with a small number of jaggies.

### <An image enlargement device according to a second embodiment of the present invention>

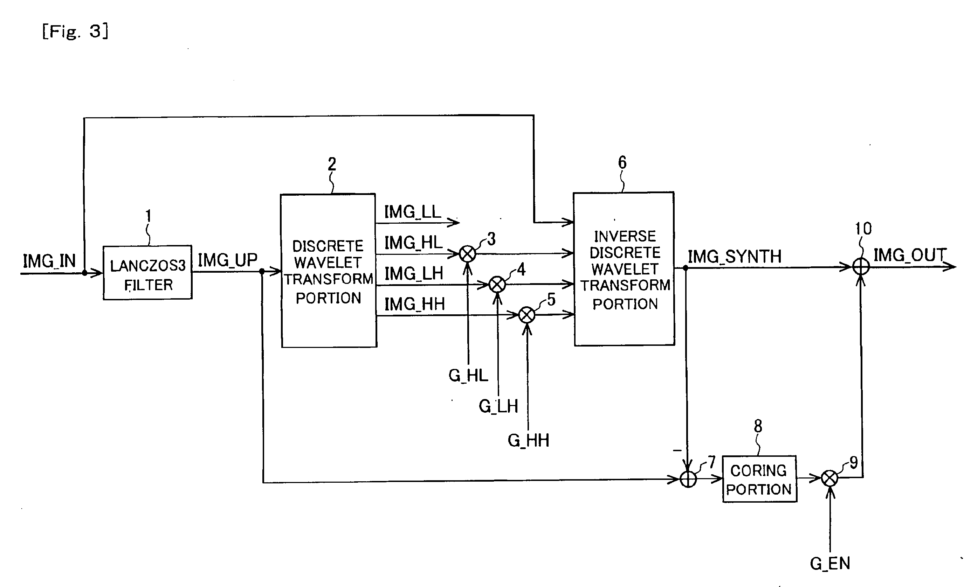

The configuration of an image enlargement device according to a second embodiment of the present invention is shown in Fig. 3. In Fig. 3, the same parts as in Fig. 1 are identified with the same symbols. The image enlargement device according to the second embodiment of the present invention includes: the Lanczos3 filter 1; the discrete wavelet transform portion 2; the multipliers 3 to 5 and a multiplier 9; the inverse discrete wavelet transform portion 6; adders 7 and 10; a coring portion 8; and the control portion (not shown) that incorporates the rewritable nonvolatile memory.

The image enlargement device according to the second embodiment of the present invention adds, to the image enlargement device according to the first embodiment of the present invention, the adder 7, the coring portion 8, the multiplier 9 and the adder 10, and thereby adds an edge enhancement function. The sub-band component IMG_LL generated in the discrete wavelet transform portion 2 indicates an image obtained by extracting low-frequency components, and includes edge information (thick edge) on the input image IMG_IN. Thus, it is possible to perform edge enhancement using a difference between the input image IMG_IN and the sub-band component IMG_LL.

When the value of each gain of the multipliers 3 to 5 is 1.0, since in the enlarged image IMG_UP and the enlarged image IMG_SYNTH, three sub-band components (the sub-band components including high-frequency components) obtained by performing the discrete wavelet transform are the same, a difference between the enlarged image IMG_UP and the enlarged image IMG_SYNTH is caused by the difference between the sub-band component IMG_LL and the input image IMG_IN. Hence, in the present embodiment, the edge enhancement is performed using the difference between the enlarged image IMG_UP and the enlarged image IMG_SYNTH.

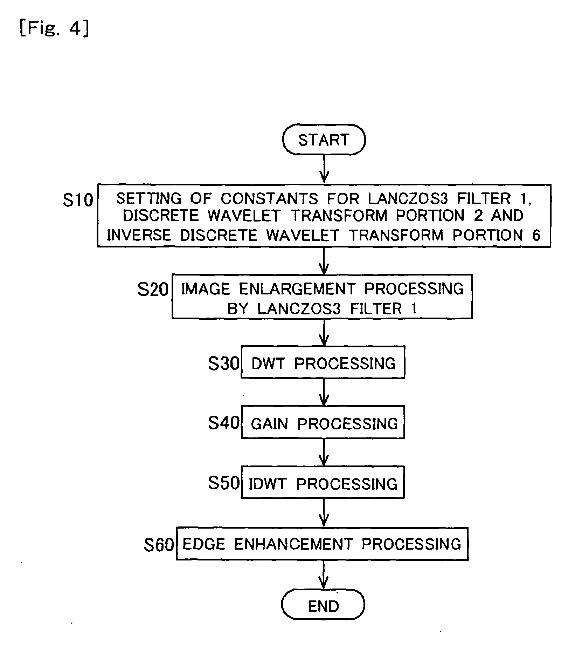

The operation of the image enlargement device according to the second embodiment of the present invention will be described with reference to a flowchart shown in Fig.4. In Fig. 4, the same steps as in Fig. 2 are identified with the same symbols.

Since the processing in steps S10 to S50 is the same as in the first embodiment, the description thereof will not be repeated.

In step S60 subsequent to step S50, edge enhancement processing is performed. The adder 7 feeds, to the coring portion 8, the result obtained by adding the inverted pixel value of the enlarged image IMG_SYNTH to the enlarged image IMG_UP. The coring portion 8 performs an input/output transform as shown in Fig. 5 on each pixel value output from the adder 7. Hence, an output of the coring portion 8 for a pixel value that is less than a coring threshold value C_{TH} and that is output from the adder 7 is "0". The control portion reads, from the nonvolatile memory, a gain value G_EN corresponding to the edge enhancement strength, and feeds the gain value G_EN to the multiplier 9. The multiplier 9 feeds, to the adder 10, the result obtained by multiplying the output of the coring portion 8 and the gain value G_EN. The adder 10 adds the output of the multiplier 9 to the enlarged image IMG_SYNTH, and thereby generates the output image IMG_OUT. The output image IMG_OUT is the output of the image enlargement device according to the second embodiment of the present invention.

In the present embodiment, when the input image IMG_IN has M pixels × N pixels (M and N each are natural numbers), the enlarged images IMG_UP and IMG_SYNTH and the output image IMG_OUT each have 2M pixels × 2N pixels, and the sub-band components IMG_LL, IMG_HL, IMG_LH and IMG_HH each have M pixels × N pixels (see Fig. 6). In other words, the image enlargement device according to the second embodiment of the present invention enlarges the image twice both in the horizontal direction and in the vertical direction, as with the image enlargement device according to the first embodiment of the present invention.

The gain value G_EN stored in the nonvolatile memory incorporated in the control portion is rewritten, and thus it is possible to freely adjust the edge enhancement strength.

Moreover, since the coring portion 8 is provided, it is possible to enhance the edge while reducing noise.

### <An image enlargement device according to a third embodiment of the present invention>

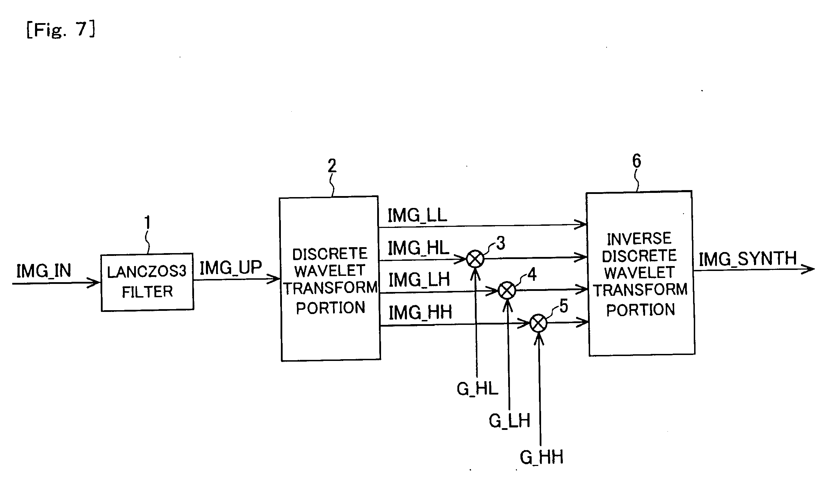

The configuration of an image enlargement device according to a third embodiment of the present invention is shown in Fig. 7. In Fig. 7, the same parts as in Fig. 1 are identified with the same symbols. As with the image enlargement device according to the first embodiment of the present invention, the image enlargement device according to the third embodiment of the present invention includes: the Lanczos3 filter 1; the discrete wavelet transform portion 2; the multipliers 3 to 5; and the inverse discrete wavelet transform portion 6.

The image enlargement device according to the third embodiment of the present invention differs from the image enlargement device according to the first embodiment of the present invention in that, in the image enlargement device according to the third embodiment of the present invention, the enlargement by the Lanczos3 filter 1 is not limited to the double enlargement both in the horizontal direction and in the vertical direction, the inverse discrete wavelet transform portion 6 does not input the input image IMG_IN, an image obtained by combining the sub-band component IMG_LL output from the discrete wavelet transform portion 2 with sub-band components IMG_HL · G_HL, IMG_LH · G_LH and IMG_HH · G_HH on which three types of gain processing have been performed is regarded as the wavelet transformed image, the inverse discrete wavelet transform is performed and thus the enlarged image IMG_SYNTH is generated. The enlarged image IMG_SYNTH output from the inverse discrete wavelet transform portion 6 is the output of the image enlargement device according to the third embodiment of the present invention.

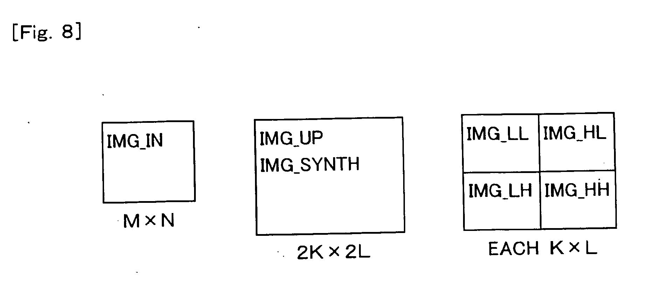

In the present embodiment, the input image IMG_IN has M pixels × N pixels (M and N each are natural numbers), the enlarged images IMG_UP and IMG_SYNTH each have 2K pixels × 2L pixels (K is a natural number more than M/2, and L is a natural number more than N/2), and the sub-band components IMG_LL, IMG_HL, IMG_LH and IMG_HH each have K pixels × L pixels (see Fig. 8). In other words, the image enlargement device according to the third embodiment of the present invention can perform the enlargement processing as long as the number of pixels in the horizontal direction of and the number of pixels in the vertical direction of the enlarged image to be output are multiples of two.

In the first embodiment and the second embodiment, as described above, an image is only enlarged twice both in the horizontal direction and in the vertical direction. However, the size of a desired enlarged image is not necessarily twice the size of an input image that is the original image, both in the horizontal direction and in the vertical direction. Hence, if the size of the desired enlarged image is not twice the size of the input image that is the original image, both in the horizontal direction and in the vertical direction, it is possible to obtain the desired enlarged image by providing a conventional enlargement/reduction processing device in a stage before or after the image enlargement device according to the first embodiment of the present invention or the image enlargement device according to the second embodiment of the present invention. However, in this case, a cost corresponding to the provision of the conventional enlargement/reduction processing device is added.

Since, as shown in Table 1, typical display television signals and the image sizes of display panels are multiples of two, both in the horizontal direction and in the vertical direction, even if the conventional enlargement/reduction processing device is not provided in the stage before or after the image enlargement device according to the third embodiment of the present invention, it can handle the typical display television signals and the image sizes of the display panels.

[Table 1]

| Common Name | Image Size |
|---|---|
| NTSC | 720 × 480 |
| PAL | 720 × 576 |
| XGA | 1024 × 768 |
| 720P | 1280 × 720 |
| WXGA | 1280 × 768 |
| HD | 1366 × 768 |
| Full HD | 1920 × 1080 |
| 4k × 2k | 2048 × 1024 |
| 8k × 4k | 4096 × 2048 |

### <A display apparatus according to the present invention>

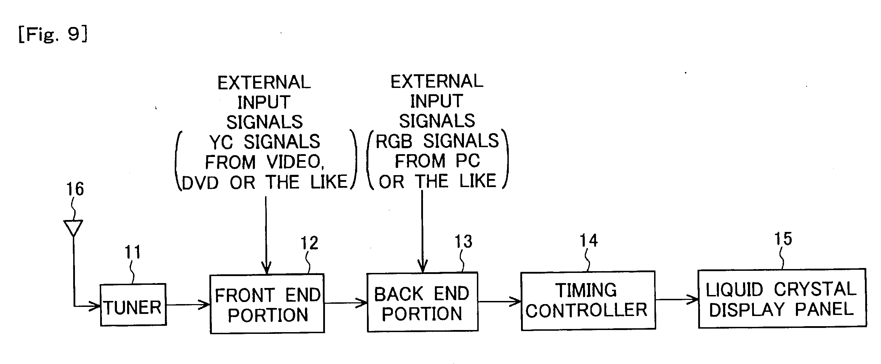

A schematic configuration of a liquid crystal television set that is an example of a display apparatus according to the present invention is shown in Fig. 9. The liquid crystal television set shown in Fig. 9 includes a tuner 11, a front end portion 12, a back end portion 13, a timing controller 14 and a liquid crystal display panel 15.

The tuner 11 transforms broadcast wave signals of a received channel included in high-frequency signals transmitted through an antenna 16 into signals having a specific frequency, and outputs them to the front end portion 12.

The front end portion 12 processes the output signals of the tuner 11 or external input signals (YC signals from a video, a DVD or the like). When the signals to be processed are composite signals, the front end portion 12 performs YC separation processing. When the signals to be processed are compressed signals, the front end portion 12 performs decode processing. When the signals to be processed are signals of an interlaced system, the front end portion 12 performs IP transform processing, and thereby transforms the signals of the interlaced system into signals of a progressive system.

The back end portion 13 includes a RGB transform processing portion (not shown in Fig. 9) that transforms the YC signals into RGB signals. The back end portion 13 also includes a scaler/edge enhancement processing portion (not shown in Fig. 9) that performs scaler processing and edge enhancement processing. The back end portion 13 processes the output signals of the front end portion 12 or external input signals (RGB signals from a personal computer or the like), and outputs the RGB signals on which the scaler processing and the edge enhancement processing have been performed to the timing controller 14.

The timing controller 14 performs, on the output signals of the back end portion 13, processing such as frame rate transform (for example, double speed processing), gamma correction, correction for predicting the change in video signal and intensifying a drive signal before the change is made and the like, and uses the drive signal obtained by performing the processing to drive the liquid crystal display panel 15.

In the liquid crystal television set that is an example of the display apparatus according to the present invention and that is shown in Fig. 9, the image enlargement device according to the present invention is provided within the scaler/edge enhancement processing portion of the back end portion 13.

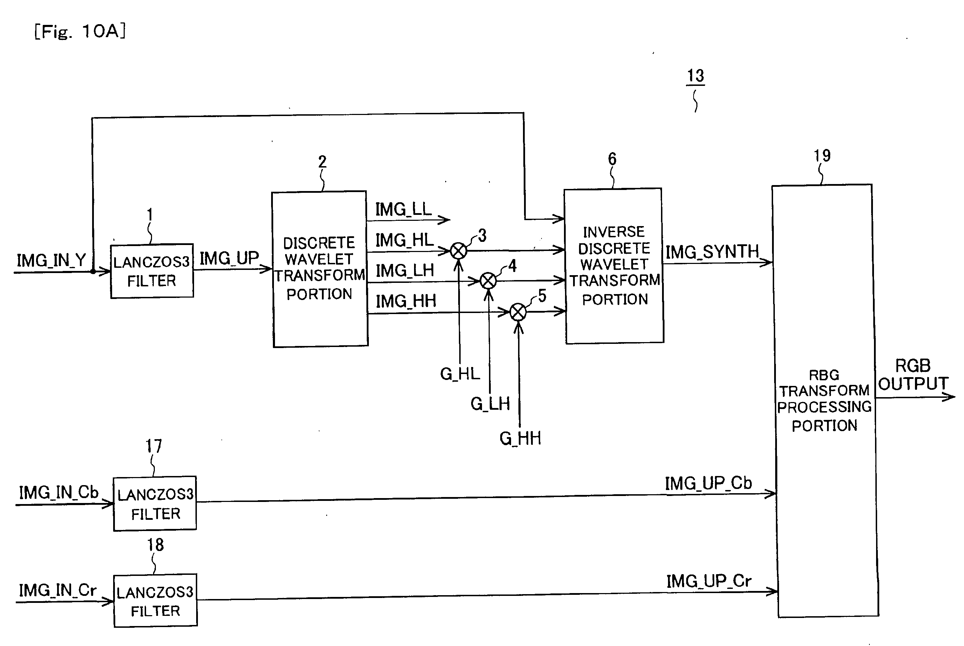

Here, an example of the configuration of the back end portion 13 when the image enlargement device according to the first embodiment of the present invention is provided is shown in Fig. 10A. In Fig. 10A, the same parts as in Fig. 1 are identified with the same symbols.

In the back end portion 13 shown in Fig. 10A, a RGB transform processing portion 19 for transforming the YC signals into the RGB signals is provided in a stage after the scaler/edge enhancement processing portion composed of the image enlargement device according to the first embodiment of the present invention and Lanczos3 filters 17 and 18. The back end portion 13 shown in Fig. 10A also includes a YC transform processing portion (not shown) that transforms the RGB signals into the YC signals; when the external input signals (RGB signals from a personal computer or the like) are processed, the back end portion 13 first uses the YC transform processing portion to transform the external input signals into the YC signals.

In the back end portion 13 shown in Fig. 10A, the image enlargement devices according to the first embodiment of the present invention treats a brightness image IMG_IN_Y as an input image. The scaler processing is performed by the Lanczos3 filter 17 on a color difference image IMG_IN_Cb, and the color difference image IMG_IN_Cb is transformed into an enlarged color difference image IMG_UP_Cb that has been enlarged twice both in the horizontal direction and in the vertical direction, and is fed to the RGB transform processing portion 19. The scaler processing is performed by the Lanczos3 filter 18 on a color difference image IMG_IN_Cr, and the color difference image IMG_IN_Cr is transformed into an enlarged color difference image IMG_UP_Cr that has been enlarged twice both in the horizontal direction and in the vertical direction, and is fed to the RGB transform processing portion 19.

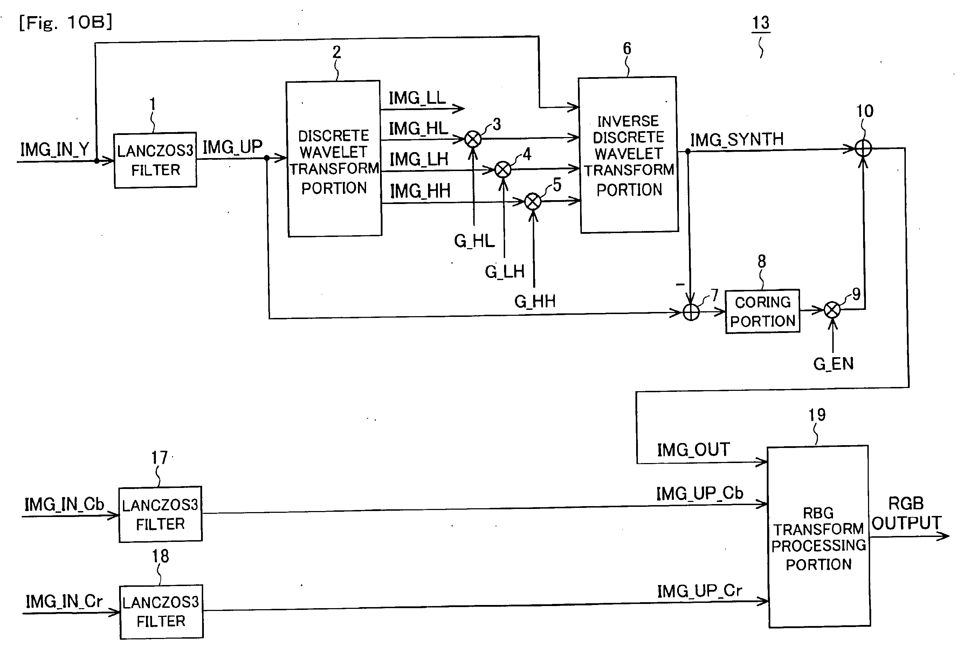

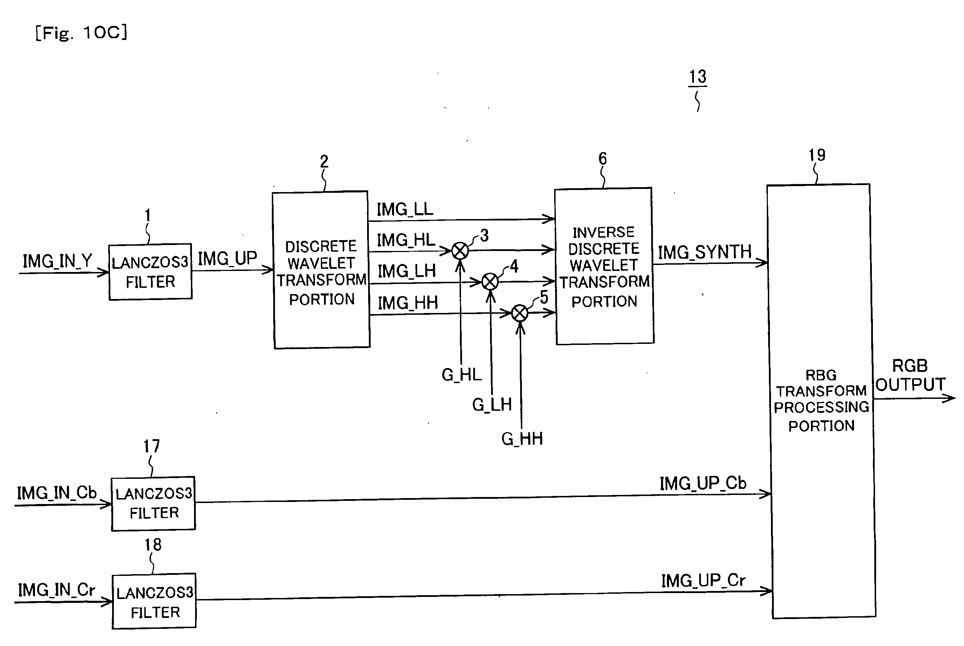

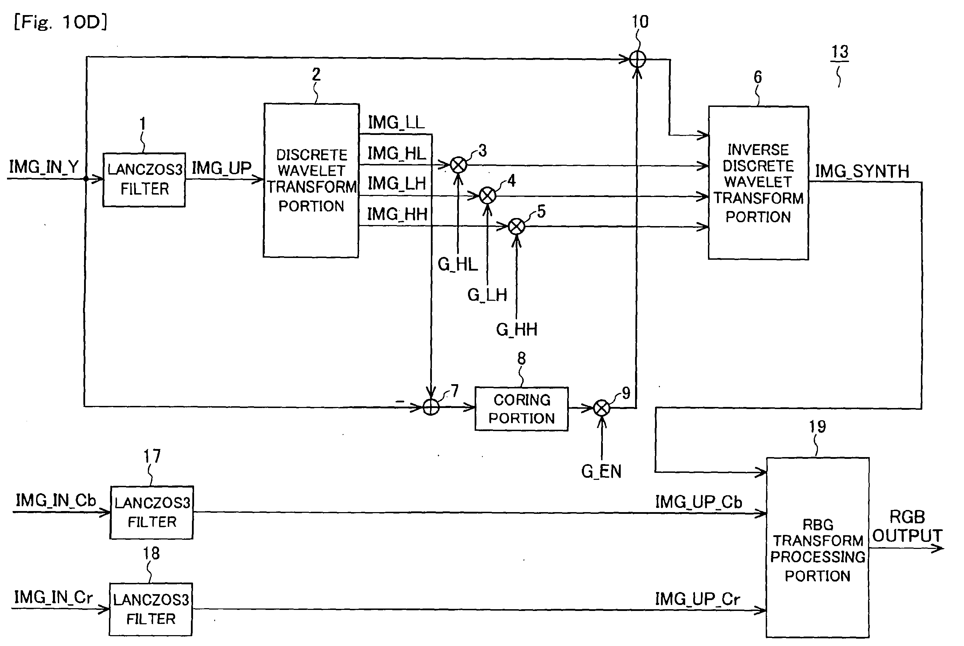

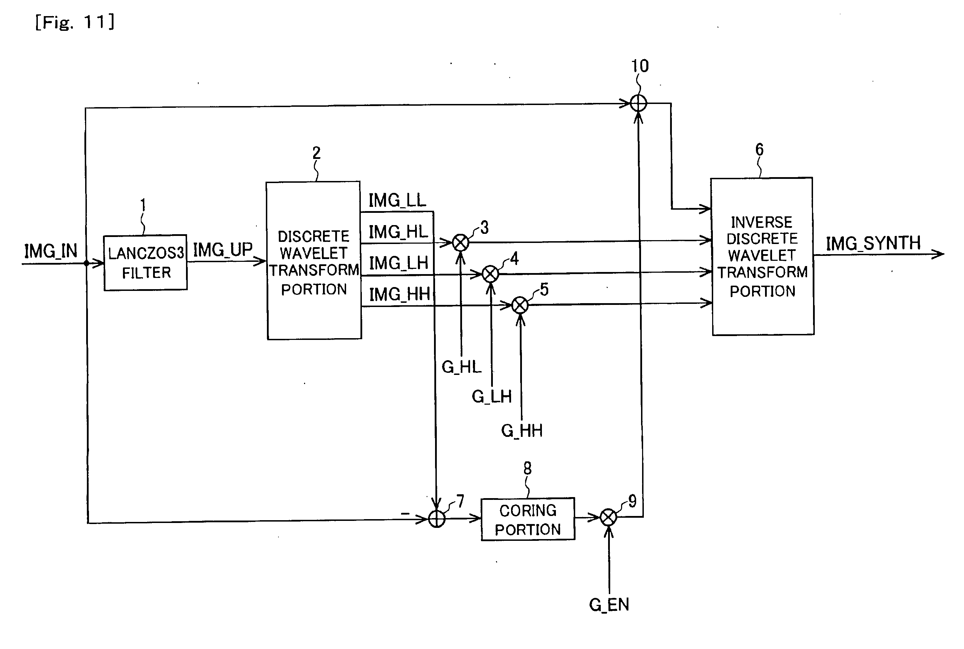

Naturally, instead of the image enlargement device according to the first embodiment of the present invention, an image enlargement device according to the present invention (for example, the image enlargement device according to the second embodiment of the present invention, the image enlargement device according to the third embodiment of the present invention, an image enlargement device of the present invention described later and shown in Fig. 11 or the like) other than the image enlargement device according to the first embodiment of the present invention may be provided. An example of the configuration of the back end portion 13 when the image enlargement device according to the second embodiment of the present invention is provided is shown in Fig. 10B; an example of the configuration of the back end portion 13 when the image enlargement device according to the third embodiment of the present invention is provided is shown in Fig. 10C; an example of the configuration of the back end portion 13 when the image enlargement device of the present invention described later and shown in Fig. 11 is provided is shown in Fig. 10D.

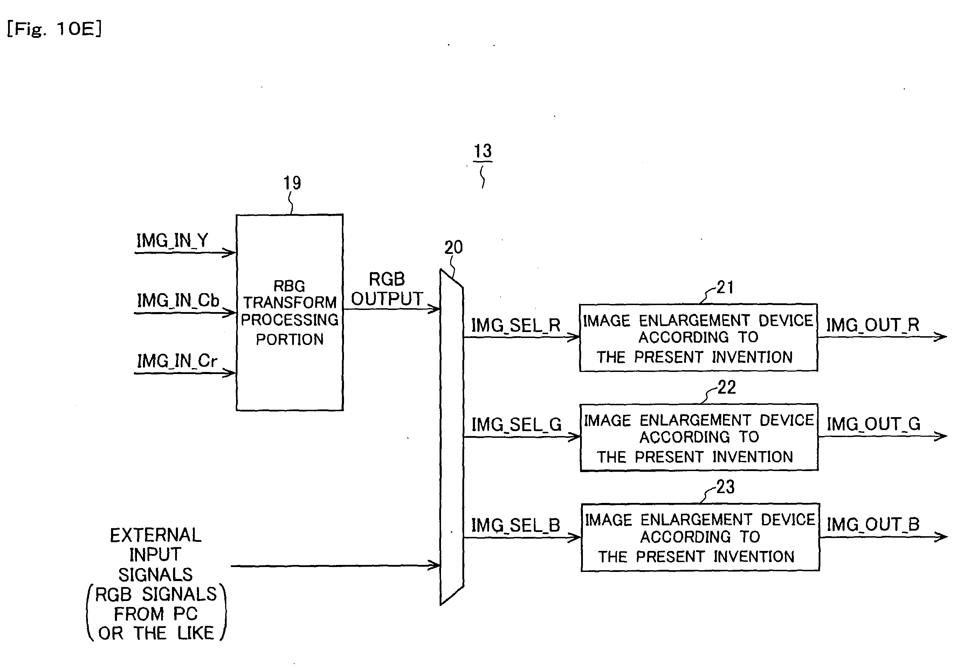

Unlike the configurations shown in Figs. 10A to 10D, it is possible to configure the back end portion 13 as shown in Fig. 10E by providing the scaler/edge enhancement processing portion in the stage after the RGB transform processing portion. In the back end portion 13 shown in Fig. 10E, a selector 20 and image enlargement devices 21 to 23 according to the present invention are provided in the stage after the RGB transform processing portion 19 for transforming the YC signals into the RGB signals. In the back end portion 13 shown in Fig. 10E, since an image enlargement device according to the present invention is needed for each of the RGB, three image enlargement devices according to the present invention are necessary. The RGB transform processing portion 19 transforms the output signals (the brightness image IMG_IN_Y, the color difference image IMG_IN_Cb and the color difference image IMG_IN_Cr) of the front end portion 12 (see Fig. 9) into the RGB signals, and feeds them to the selector 20. The selector 20 selects any one of the RGB output from the RGB transform processing portion 19 and the external input signals (RGB signals from a personal computer or the like). A red component image IMG_SEL_R included in the signal selected by the selector 20 is subjected to the scaler processing and the edge enhancement processing performed by the image enlargement device 21 according to the present invention, and is transformed into an enlarged red component image IMG_OUT_R. A green component image IMG_SEL_G included in the signal selected by the selector 20 is subjected to the scaler processing and the edge enhancement processing performed by the image enlargement device 22 according to the present invention, and is transformed into an enlarged green component image IMG_OUT_G. A blue component image IMG_SEL_B included in the signal selected by the selector 20 is subjected to the scaler processing and the edge enhancement processing performed by the image enlargement device 22 according to the present invention, and is transformed into an enlarged blue component image IMG_OUT_B. In other words, the image enlargement device 21 according to the present invention treats the red component image IMG_SEL_R as the input image; the image enlargement device 22 according to the present invention treats the green component image IMG_SEL_G as the input image; and the image enlargement device 23 according to the present invention treats the blue component image IMG_SEL_B as the input image. As each of the image enlargement devices 21 to 23 according to the present invention, for example, the image enlargement device according to the first embodiment of the present invention can be used; naturally, an image enlargement device according to the present invention (for example, the image enlargement device according to the second embodiment of the present invention, the image enlargement device according to the third embodiment of the present invention, the image enlargement device of the present invention described later and shown in Fig. 11 or the like) other than the image enlargement device according to the first embodiment of the present invention may be used.

### <Variations>

Although the embodiments according to the present invention have been described above, the scope of the present invention is not limited to these embodiments. Many modifications are possible without departing from the spirit of the present invention.

Although, in the above embodiments, the Lanczos3 filter is used as the image enlargement filter, it may be replaced with another filter having an image enlargement function (for example, a filter using a bi-cubic method, a filter using a sinc function with a window or a filter using the window of Haaming or Kaiser).

Although, in the second embodiment described above, the difference between the enlarged image IMG_UP and the enlarged image IMG_SYNTH is used and thus the edge enhancement is performed, alternatively, as shown in Fig. 11, the edge enhancement may be performed by directly determining the difference between the sub-band component IMG_LL and the input image IMG_IN.

The image enlargement device according to the present invention is not limited to a dedicated hardware device; for example, as shown in Fig. 12, a CPU 31 of a computer 30 such as a personal computer executes an image enlargement program stored in a memory 32, and thus the image enlargement device according to the present invention may be realized. In the CPU 31, an enlarged image obtained by enlarging an image acquired from the outside through an interface 33 or an image stored in a HDD 34 can be output to the outside through the interface 33, can be stored in the HDD 34 and can be displayed on a display portion 35.

### Industrial Applicability

An image enlargement device or an image enlargement program according to the present invention can be utilized in a device handling various images, such as a display apparatus.

### List of Reference Symbols

- 1, 17, 18: Lanczos3 filter
- 2: Discrete wavelet transform portion
- 3 to 5, 9: Multiplier
- 6: Inverse discrete wavelet transform portion
- 7, 10: Adder
- 8: Coring portion
- 11: Tuner
- 12: Front end portion
- 13: Back end portion
- 14: Timing controller
- 15: Liquid crystal display panel
- 16: Antenna
- 19: RGB transform processing portion
- 20: Selector
- 21 to 23: Image enlargement device according to the present invention
- 30: Computer
- 31: CPU
- 32: Memory
- 33: Interface
- 34: HDD
- 35: Display portion

## Claims

1. An image enlargement device comprising:
an image enlargement filter that generates a first enlarged image by enlarging an input image twice both in a horizontal direction and in a vertical direction;
a wavelet transform portion that generates, by performing a wavelet transform on the first enlarged image,
a first sub-band component indicating an image obtained by extracting a low-frequency component in the horizontal direction of and a low-frequency component in the vertical direction of the first enlarged image,
a second sub-band component indicating an image obtained by extracting a high-frequency component in the horizontal direction of the first enlarged image,
a third sub-band component indicating an image obtained by extracting a high-frequency component in the vertical direction of the first enlarged image and
a fourth sub-band component indicating an image obtained by extracting the high-frequency component in the horizontal direction of and the high-frequency component in the vertical direction of the first enlarged image;
a gain processing portion that performs gain processing on the second sub-band component, the third sub-band component and the fourth sub-band component output from the wavelet transform portion; and
an inverse wavelet transform portion that regards, as a wavelet transformed image, the input image and the second sub-band component, the third sub-band component and the fourth sub-band component which are output from the gain processing portion and on which the gain processing has been performed, and that generates a second enlarged image by performing an inverse wavelet transform.

2. The image enlargement device of claim 1, further comprising:
an edge enhancement processing portion that performs, based on a difference between the first enlarged image and the second enlarged image, edge enhancement processing on the second enlarged image.

3. The image enlargement device of claim 2,
wherein the edge enhancement processing portion includes a coring portion that performs coring processing on an image corresponding to the difference between the first enlarged image and the second enlarged image.

4. The image enlargement device of claim 1, further comprising:
an edge enhancement processing portion that performs, based on a difference between the input image and the first sub-band component, edge enhancement processing on the second enlarged image.

5. The image enlargement device of claim 4,
wherein the edge enhancement processing portion includes a coring portion that performs coring processing on an image corresponding to the difference between the input image and the first sub-band component.

6. An image enlargement device comprising:
an image enlargement filter that generates a first enlarged image by enlarging an input image;
a wavelet transform portion that generates, by performing a wavelet transform on the first enlarged image,
a first sub-band component indicating an image obtained by extracting a low-frequency component in the horizontal direction of and a low-frequency component in the vertical direction of the first enlarged image,
a second sub-band component indicating an image obtained by extracting a high-frequency component in the horizontal direction of the first enlarged image,
a third sub-band component indicating an image obtained by extracting a high-frequency component in the vertical direction of the first enlarged image and
a fourth sub-band component indicating an image obtained by extracting the high-frequency component in the horizontal direction of and the high-frequency component in the vertical direction of the first enlarged image;
a gain processing portion that performs gain processing on the second sub-band component, the third sub-band component and the fourth sub-band component output from the wavelet transform portion; and
an inverse wavelet transform portion that regards, as a wavelet transformed image, the first sub-band component and the second sub-band component, the third sub-band component and the fourth sub-band component which are output from the gain processing portion and on which the gain processing has been performed, and that generates a second enlarged image by performing an inverse wavelet transform.

7. The image enlargement device of any one of claims 1 to 6,
wherein the image enlargement filter is a filter that can raise the high-frequency component.

8. An image enlargement program that instructs a computer to function as an image enlargement device comprising:
an image enlargement filter that generates a first enlarged image by enlarging an input image twice both in a horizontal direction and in a vertical direction;
a wavelet transform portion that generates, by performing a wavelet transform on the first enlarged image,
a first sub-band component indicating an image obtained by extracting a low-frequency component in the horizontal direction of and a low-frequency component in the vertical direction of the first enlarged image,
a second sub-band component indicating an image obtained by extracting a high-frequency component in the horizontal direction of the first enlarged image,
a third sub-band component indicating an image obtained by extracting a high-frequency component in the vertical direction of the first enlarged image and
a fourth sub-band component indicating an image obtained by extracting the high-frequency component in the horizontal direction of and the high-frequency component in the vertical direction of the first enlarged image;
a gain processing portion that performs gain processing on the second sub-band component, the third sub-band component and the fourth sub-band component output from the wavelet transform portion; and
an inverse wavelet transform portion that regards, as a wavelet transformed image, the input image and the second sub-band component, the third sub-band component and the fourth sub-band component which are output from the gain processing portion and on which the gain processing has been performed, and that generates a second enlarged image by performing an inverse wavelet transform.

9. An image enlargement program that instructs a computer to function as an image enlargement device comprising:
an image enlargement filter that generates a first enlarged image by enlarging an input image;
a wavelet transform portion that generates, by performing a wavelet transform on the first enlarged image,
a first sub-band component indicating an image obtained by extracting a low-frequency component in the horizontal direction of and a low-frequency component in the vertical direction of the first enlarged image,
a second sub-band component indicating an image obtained by extracting a high-frequency component in the horizontal direction of the first enlarged image,
a third sub-band component indicating an image obtained by extracting a high-frequency component in the vertical direction of the first enlarged image and
a fourth sub-band component indicating an image obtained by extracting the high-frequency component in the horizontal direction of and the high-frequency component in the vertical direction of the first enlarged image;
a gain processing portion that performs gain processing on the second sub-band component, the third sub-band component and the fourth sub-band component output from the wavelet transform portion; and
an inverse wavelet transform portion that regards, as a wavelet transformed image, the first sub-band component and the second sub-band component, the third sub-band component and the fourth sub-band component which are output from the gain processing portion and on which the gain processing has been performed, and that generates a second enlarged image by performing an inverse wavelet transform.

10. A display apparatus comprising:
the image enlargement device of any one of claims 1 to 7.

11. The display apparatus of claim 10,
wherein the input image of the image enlargement device is a brightness image.

12. The display apparatus of claim 10, comprising:
three of the image enlargement devices,
wherein an input image of the first image enlargement device is a red component image, an input image of the second image enlargement device is a green component image and an input image of the third image enlargement device is a blue component image.
